# EUROPÄISCHE PATENTSCHRIFT

(11) **EP 3 208 171 B1**
(45) Veröffentlichungstag und Bekanntmachung des Hinweises auf die Patenterteilung: **15.07.2020**
(21) Anmeldenummer: 17151801.2
(22) Anmeldetag: 17.01.2017
(51) Int. Cl.: B61D 17/22, B60D 5/00

(54) **MITTELBÜGELSYSTEM FÜR EIN GELENKFAHRZEUG**
BRACKET SYSTEM FOR AN ARTICULATED VEHICLE
SYSTÈME DE CINTRE MOYEN POUR UN VÉHICULE ARTICULÉ

(30) Priorität: 18.02.2016 EP 16156369
(43) Veröffentlichungstag der Anmeldung: 23.08.2017
(73) Patentinhaber: ATG Autotechnik GmbH, 22962 Siek (DE)
(72) Erfinder: Browne, Denis, 22946 Trittau (DE)
(74) Vertreter: Glawe, Delfs, Moll

(56) Entgegenhaltungen:
- EP-A1- 2 384 913
- EP-B1- 0 897 337

## Beschreibung

Die Erfindung betrifft ein Mittelbügelsystem für ein Gelenkfahrzeug, umfassend einen Mittelbügel. Das Gelenkfahrzeug umfasst einen Vorderwagen und einen Hinterwagen, die durch ein Fahrzeuggelenk miteinander verbunden sind. Es besteht ein Durchgang zwischen dem Vorderwagen und dem Hinterwagen, der von dem Mittelbügel umschlossen ist. Das Mittelbügelsystem umfasst einen Kabelstrang, der zwischen dem Vorderwagen und dem Hinterwagen angeordnet werden kann. Der Kabelstrang ist oberhalb des Durchgangs anordenbar.

Solche Mittelbügelsysteme kommen beispielsweise in Gelenkbussen zum Einsatz, in denen während der Fahrt ein Übergang der Passagiere zwischen dem Vorderwagen und dem Hinterwagen möglich ist. Um die Passagiere vor Umgebungseinflüssen zu schützen, ist zwischen dem Vorderwagen und dem Hinterwagen normalerweise ein Faltenbalg vorgesehen, der das Fahrzeuggelenk umgibt.

In diesen Gelenkfahrzeugen gibt es technische Funktionen, die sowohl den Vorderwagen als auch den Hinterwagen betreffen. Betätigt beispielsweise der im Vorderwagen sitzende Fahrer den Lichtschalter, so soll dies dazu führen, dass ein Rücklicht des Hinterwagens leuchtet. Um dies zu ermöglichen, erstreckt sich ein elektrisches Kabel vom Vorderwagen über den Zwischenraum hinweg bis zum Hinterwagen. Weitere Funktionen erfordern Hydraulikleitungen, Luftschläuche und sonstige Versorgungsleitungen zwischen dem Vorderwagen und dem Hinterwagen.

In Niederflurfahrzeugen, bei denen der für die Passagiere bestimmte Boden möglichst tief angeordnet ist, bleibt unterhalb des Durchgangs, der den Vorderwagen und den Hinterwagen verbindet, nur wenig Platz. Mehr Platz steht oberhalb des Durchgangs zur Verfügung, weswegen die Kabel häufig dort geführt sind.

Um zu verhindern, dass der Kabelstrang beim Überfahren von Bodenwellen oder bei Unebenheiten an dem Mittelbügel anstoßen, ist eine Führung des Kabelstrangs relativ zu dem Mittelbügel erforderlich. Die bekannten Systeme (EP 0 897 337 A1, EP 2 384 913 A1) sind komplex und aufwändig in der Herstellung.

Der Erfindung liegt die Aufgabe zugrunde, ein kostengünstiges Mittelbügelsystem vorzustellen, bei dem der Kabelstrang so geführt ist, dass er nicht am Mittelbügel anstoßen kann. Ausgehend vom genannten Stand der Technik wird die Aufgabe gelöst mit den Merkmalen des Anspruchs 1. Vorteilhafte Ausführungsformen sind in den Unteransprüchen angegeben.

Erfindungsgemäß ist das Mittelbügelsystem so gestaltet, dass ein Schwenkhebel sich zwischen dem Mittelbügel und dem Kabelstrang erstreckt. Zwischen dem Schwenkhebel und dem Mittelbügel ist ein erstes Schwenkgelenk ausgebildet. Der Schwenkhebel führt den Kabelstrang in einer bevorzugten Ausführungsform mit einem Abstand zu dem ersten Schwenkgelenk. Abstand zu dem ersten Schwenkgelenk bedeutet insbesondere, dass die Achse des ersten Schwenkgelenks den Kabelstrang nicht schneidet. Der Kabelstrang hat also einen radialen Abstand zur Achse des ersten Schwenkgelenks.

Zunächst werden einige Begriffe erläutert. Kabel im Sinne der vorliegenden Erfindung dienen dazu, technische Funktionen des Vorderwagens und des Hinterwagens miteinander zu verknüpfen. Der Begriff Kabel umfasst alle Versorgungsleitungen, über die Signale oder Kräfte zwischen dem Vorderwagen und dem Hinterwagen übertragen werden. Vom Begriff Kabel umfasst sind insbesondere elektrische Kabel, Glasfaserleitungen, Hydraulikleitungen, Luftschläuche für Klimaanlage und Heizung. Bei dem erfindungsgemäßen Mittelbügelsystem erstreckt sich eine Mehrzahl solcher Kabel zwischen dem Vorderwagen und dem Hinterwagen. Der Kabelstrang umfasst alle Kabel, die mit dem Schwenkhebel geführt sind. Die Längsrichtung des Fahrzeugs schließt mit dem Mittelbügel einen rechten Winkel ein.

Die Bewegungen, die im Betrieb des Gelenkfahrzeugs zwischen dem Vorderwagen und dem Hinterwagen stattfinden, sind komplex. Sie umfassen Drehen, Nicken, Wanken sowie Kombinationen daraus. Die Bewegungen, die der Kabelstrang und der Mittelbügel dabei im Zwischenraum zwischen dem Vorderwagen und dem Hinterwagen vollführen, sind nicht immer synchron. Durch den erfindungsgemäßen Schwenkhebel wird einerseits die erforderliche Bewegungsfreiheit zwischen dem Kabelstrang und dem Mittelbügel ermöglicht, während andererseits solche Bewegungen unterbunden werden, die unerwünscht sind. Unerwünscht sind vor allem solche Bewegungen des Kabelstrangs, durch die der Kabelstrang am Mittelbügel anschlägt.

Hingegen ist gewünscht, dass in Bezug auf Längsbewegungen eine Bewegungsfreiheit zwischen dem Kabelstrang und dem Mittelbügel besteht. Indem der Kabelstrang durch den Schwenkhebel mit einem Abstand zu dem ersten Schwenkgelenk geführt wird, kann der Mittelbügel sich in Längsrichtung bewegen, ohne dass der Kabelstrang ebenfalls zu einer entsprechenden Bewegung gezwungen wird. Dafür ist es insbesondere von Vorteil, wenn es von dem ersten Schwenkgelenk aus gesehen nur eine Richtung des Schwenkhebels gibt, in der der Kabelstrang mit dem Schwenkhebel verbunden ist. Ein Schwenkhebel, der auf zwei Seiten des ersten Schwenkgelenks mit dem Kabelstrang verbunden ist, bewirkt regelmäßig eine unerwünschte Zwangsführung in Längsrichtung. Dies gilt insbesondere, wenn der Kabelstrang sich parallel zu dem Schwenkhebel erstreckt und damit nicht in einem Abstand zu derm ersten Schwenkgelenk geführt ist.

Der erfindungsgemäße Schwenkhebel ist vorzugsweise so gestaltet, dass er eine definierte Vertikalführung für den Kabelstrang bietet. Definierte Vertikalführung bedeutet, dass weder eine von oben nach unten gerichtete Kraft noch eine von unten nach oben gerichtete Kraft eine Bewegung in vertikaler Richtung bewirken kann. Die definierte Vertikalführung ist vorzugsweise unabhängig von der Winkelposition des Schwenkhebels.

Der Schwenkhebel erstreckt sich vorzugsweise zwischen einer Aufhängung am Mittelbügel und einer Aufhängung an einem Trageelement des Kabelstrangs. Die Aufhängung am Mittelbügel und die Aufhängung an dem Trageelement des Kabelstrangs haben vorzugsweise in horizontaler Richtung einen Abstand zueinander. Dadurch wird eine Übertragung der vertikalen Kräfte zwischen dem Kabelstrang und dem Mittelbügel möglich.

Zwischen dem Schwenkhebel und dem Mittelbügel kann ein erstes Schwenkgelenk vorgesehen sein, über das der Schwenkhebel relativ zu dem Mittelbügel geschwenkt werden kann. Das erste Schwenkgelenk kann nahe einem ersten Ende des Schwenkhebels angeordnet sein. Die Achse des ersten Schwenkgelenks kann im Wesentlichen vertikal oder vorzugsweise genau vertikal ausgerichtet sein.

Zwischen dem Schwenkhebel und dem Kabelstrang kann ein zweites Schwenkgelenk vorgesehen sein, über das der Schwenkhebel relativ zu dem Trageelement des Kabelstrangs geschwenkt werden kann. Das zweite Schwenkgelenk kann nahe einem zweiten Ende des Schwenkhebels angeordnet sein. Die Achse des zweiten Schwenkgelenks kann im Wesentlichen vertikal oder vorzugsweise genau vertikal ausgerichtet sein.

Im Normalzustand, in dem das Gelenkfahrzeug gerade auf einer ebenen Fläche steht, ist der Schwenkhebel vorzugsweise horizontal ausgerichtet. Der Winkel, den der Schwenkhebel mit der Querrichtung einschließt, ist vorzugsweise kleiner als 45°, weiter vorzugsweise kleiner als 30°, weiter vorzugsweise kleiner als 10°. Der Schwenkbereich, für den der Schwenkhebel im Betrieb des Gelenkfahrzeugs ausgerichtet ist, schließt vorzugsweise die Querrichtung ein.

Der Winkel, unter dem der Schwenkebel den Kabelstrang schneidet, ist im Normalzustand des Gelenkfahrzeugs vorzugsweise größer als 45°, weiter vorzugsweise größer als 60°, weiter vorzugsweise größer als 80°. Der Winkel, unter dem der Kabelstrang im Normalzugstand des Gelenkfahrzeugs den Mittelbügel schneidet, ist einer bevorzugten Ausführungsform größer als 45°, vorzugsweise größer als 60°, weiter vorzugsweise größer als 90°.

Wenn der Schwenkhebel eine feste Länge hat und über in fester Position angeordnete Schwenkgelenke mit dem Mittelbügel und dem Trageelement des Kabels verbunden ist, so ergibt sich eine Zwangsführung in horizontaler Richtung, weil die Bewegung, die das mit dem Kabelstrang verbundene Ende Schwenkhebels vollführt nicht immer der Längsrichtung des Kabelstrangs in diesem Abschnitt entspricht. Um eine solche Zwangsführung zu vermeiden, kann eine Schiebeführung zwischen dem Schwenkhebel und dem Mittelbügel und/oder zwischen dem Schwenkhebel und dem Kabelstrang vorgesehen sein. Die Schiebeführung kann in Querrichtung ausgerichtet sein oder wenigstens eine Richtungskomponente in Querrichtung umfassen. Bevorzugt ist die Schiebeführung zwischen dem Mittelbügel und dem Schwenkgelenk des Schwenkhebels angeordnet. Zusätzlich oder alternativ zu der Schiebeführung kann der Schwenkhebel eine variable Länge haben, die sich im Betrieb des Gelenkfahrzeugs durch die Bewegungen zwischen dem Vorderwagen und dem Hinterwagen verändert.

Um Bewegungen zwischen dem Vorderwagen und dem Hinterwagen aufnehmen zu können, nimmt der Kabelstrang regelmäßig einen geschwungenen Weg im Zwischenraum zwischen dem Vorderwagen und dem Hinterwagen. Um die Deckenhöhe im Durchgang nicht unnötig einzuschränken, sollte sich der kurvenförmige Weg im Wesentlichen in einer horizontalen Ebene erstrecken. In einer vorteilhaften Ausführungsform ist eine Kabelführung vorgesehen, an der sich der Weg des Kabelstrangs im Zwischenraum zwischen dem Vorderwagen und dem Hinterwagen orientieren kann. Die Kabelführung hat vorzugsweise eine feste Länge. Die Kabelführung kann beispielsweise eine Blattfeder umfassen, die am Vorderwagen und am Hinterwagen befestigt ist und die im Zwischenraum im Wesentlichen den gleichen Weg wie der Kabelstrang nimmt. Als Blattfeder wird ein lang gestrecktes Element bezeichnet, das sich quer zu seiner Längsrichtung in einer Richtung leicht elastisch verformen lässt und in einer anderen Richtung schwerer elastisch verformen lässt. Möglich ist es auch, dass die Kabelführung starre Lenkstangen umfasst, die in geeigneter Weise an Gelenken aufgehängt sind, so dass sie Bewegungen zwischen dem Vorderwagen und dem Hinterwagen aufnehmen können.

Bei einigen Gelenkfahrzeugen ist der Mittelbügel so geführt, dass er immer eine mittige Stellung zwischen dem Vorderwagen und dem Hinterwagen einnimmt. Mit einem solchen Mittelbügel kann die erfindungsgemäße Lagerung für den Kabelstrang ohne weiteres verwendet werden. Möglich ist auch eine Verwendung mit Mittelbügeln, die im Betrieb des Gelenkfahrzeugs nicht auf eine mittige Position zwischen dem Vorderwagen und dem Hinterwagen festgelegt sind. Beispielsweise kann der Mittelbügel mittels einer Lenkstange in einem festen Abstand zu dem Vorderwagen oder dem Hinterwagen gehalten sein. Die Lenkstange kann an dem Mittelbügel angelenkt sein und eine Drehung des Mittelbügels um eine senkrechte Achse erlauben. Wenn der Mittelbügel durch eine solche Lenkstange in einem festen Abstand zu einem der Wagen gehalten wird, werden Nickbewegungen durch eine Relativbewegung zwischen dem Mittelbügel und dem anderen Wagen ausgeglichen.

Statt eines vollständig starren Lenkers kann auch eine Verbindung vorgesehen sein, die gegenüber Druckkräften starr ist, die sich aber unter Zugkräften verlängern lässt. Wenn das Gelenkfahrzeug über eine Kuppe fährt und sich der Abstand zwischen dem Vorderwagens und dem Hinterwagen im oberen Bereich deswegen vergrößert, kann der Mittelbügel sich von dem Wagen, zu dem die Verbindung besteht, entfernen und dadurch dazu beitragen, den Abstand zu überbrücken. Der Abstand zwischen dem Mittelbügel und dem Vorderwagen oder Hinterwagen, den die Lenkstange im Normalzustand definiert, ist dann zugleich der Mindestabstand. Hingegen kann der Abstand durch Zugkraft vergrößert werden.

Die Erfindung wird nachfolgend unter Bezugnahme auf die beigefügten Zeichnungen anhand vorteilhafter Ausführungsformen beschrieben. Es zeigen:
- Fig. 1:: eine Seitenansicht eines Gelenkfahrzeugs;
- Fig. 2:: eine perspektivische Ansicht eines erfindungsgemäßen Mittelbügelsystems;
- Fig. 3:: eine schematische Ansicht von oben auf ein erfindungsgemäßes Mittelbügelsystem;
- Fig. 4:: die Ansicht aus Fig. 3 bei einer weiteren Ausführungsform der Erfindung;
- Fig. 5:: die Ansicht aus Fig. 3 bei noch einer weiteren Ausführungsform der Erfindung; und
- Fig. 6:: eine Ansicht in Längsrichtung auf einen Teil eines erfindungsgemäßen Mittelbügelsystems.

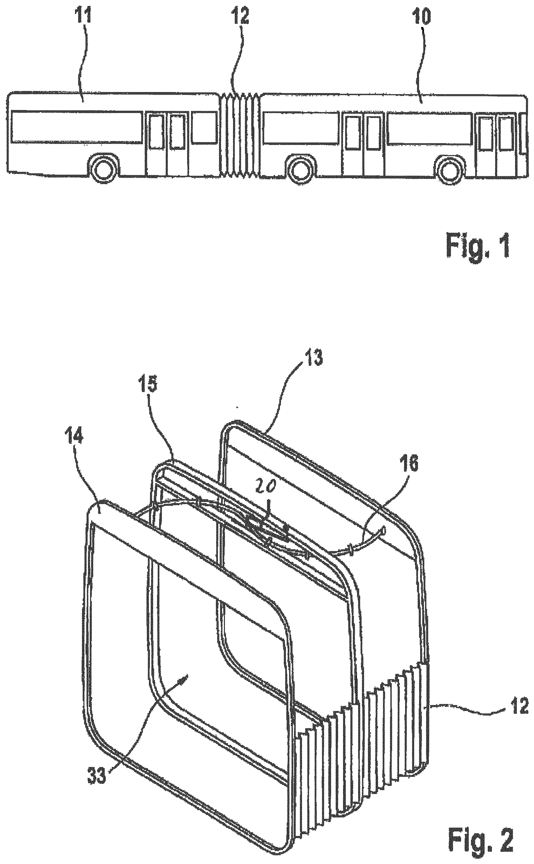

Ein in Fig. 1 gezeigter Gelenkbus umfasst einen Vorderwagen 10 und einen Hinterwagen 11. Der Vorderwagen 10 und der Hinterwagen 11 sind über ein in Fig. 1 nicht dargestelltes Fahrzeuggelenk derart miteinander verbunden, dass Passagiere während der Fahrt durch einen Durchgang 33 hindurch zwischen dem Vorderwagen 10 und dem Hinterwagen 11 wechseln können. Ein Faltenbalg 12 umgibt das Fahrzeuggelenk und den Durchgang 33. Das erfindungsgemäße Mittelbügelsystem ist im Zwischenraum zwischen dem Vorderwagen 10 und dem Hinterwagen 11 angeordnet und in Fig. 1 durch den Faltenbalg 12 verdeckt.

Fig. 2 zeigt den Endrahmen 13 des Vorderwagens 10 und den Endrahmen 14 des Hinterwagens 11. Der Faltenbalg 12 ist in Fig. 2 nur ausschnittsweise gezeigt. Zwischen dem Endrahmen 13 und dem Endrahmen 14 ist ein Mittelbügel 15 angeordnet, der dem Faltenbalg 12 zusätzlichen Halt vermittelt. Ein Kabelstrang 16 erstreckt sich vom Endrahmen 13 zum Endrahmen 14. Der Kabelstrang 16 nimmt im Zwischenraum zwischen dem Vorderwagen 10 und dem Hinterwagen 11 einen geschwungenen Weg, der sich im Wesentlichen in einer horizontalen Ebene erstreckt. Der Kabelstrang 16 ist dadurch in der Lage, Bewegungen auszugleichen, die der Vorderwagen 10 und der Hinterwagen 11 relativ zueinander vollführen.

Am Mittelbügel 15 ist der Kabelstrang 16 über einen Schwenkhebel 20 aufgehängt. Der Schwenkhebel 20 ist sowohl relativ zu dem Mittelbügel 15 als auch relativ zu dem Kabelstrang 16 um eine senkrechte Achse schwenkbar. Damit wird dem Kabelstrang 16 eine Bewegungsfreiheit in Längsrichtung relativ zu dem Mittelbügel 15 gewährt, durch die Relativbewegungen zwischen dem Vorderwagen 10 und dem Hinterwagen 11 ausgeglichen werden können. Der Kabelstrang 16 und der Mittelbügel 15 können unabhängig voneinander die Position einnehmen, in der sie der geringsten Belastung ausgesetzt sind.

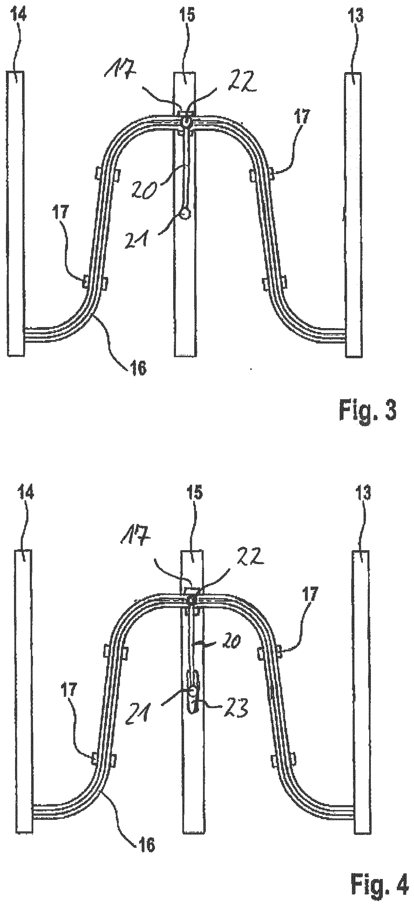

Bei der Ausführungsform der Fig. 3 erstreckt sich der Kabelstrang 16 zwischen dem Endrahmen 13 und dem Endrahmen 14. Die Kabel des Kabelstrangs 16 werden durch Trageelemente 17 in einer horizontalen Ebene parallel zueinander gehalten, so dass sie sich in Form eines einheitlichen Strangs durch den Zwischenraum zwischen dem Endrahmen 13 und dem Endrahmen 14 erstrecken.

Die Lagerung des Kabelstrangs 16 relativ zu dem Mittelbügel 15 erfolgt über den Schwenkhebel 20, der über ein erstes Schwenkgelenk 21 mit dem Mittelbügel 15 verbunden ist und der über ein zweites Schwenkgelenk 22 mit einem der Trageelemente 17 des Kabelstrangs 16 verbunden ist. Durch den Schwenkhebel 20 unterliegt der Kabelstrang 16 einer definierten Vertikalführung, so dass der Kabelstrang 16 beim Überfahren von Bodenwellen oder bei Unebenheiten nicht nach oben oder unten schlagen kann. In der horizontalen Ebene hat der Kabelstrang 16 relativ zu dem Mittelbügel 15 eine weitgehende Bewegungsfreiheit. Lediglich durch die feste Länge des Schwenkhebels 20 ergibt sich eine gewisse Zwangsführung.

In Fig. 4 ist eine Ausführungsform gezeigt, bei der zwischen dem Schwenkhebel 20 und dem Mittelbügel 15 zusätzlich eine in Querrichtung ausgerichtete Schiebeführung 23 vorgesehen ist. Der Anlenkpunkt des Schwenkgelenks 21 kann sich über die Schiebeführung 23 relativ zu dem Mittelbügel 15 bewegen. Die in Fig. 3 durch die Länge des Schwenkhebels 20 gegebene Zwangsführung wird dadurch aufgehoben. Bezogen auf die horizontale Ebene können Kabelstrang 16 und der Mittelbügel 15 sich frei relativ zueinander bewegen, so dass beide die Position einnehmen können, in der die geringsten Spannungen auftreten. In der vertikalen Richtung hingegen unterliegt der Kabelstrang 16 weiterhin der gewünschten definierten Führung, so dass ein Schlagen des Kabelstrangs nach oben oder unten verhindert wird.

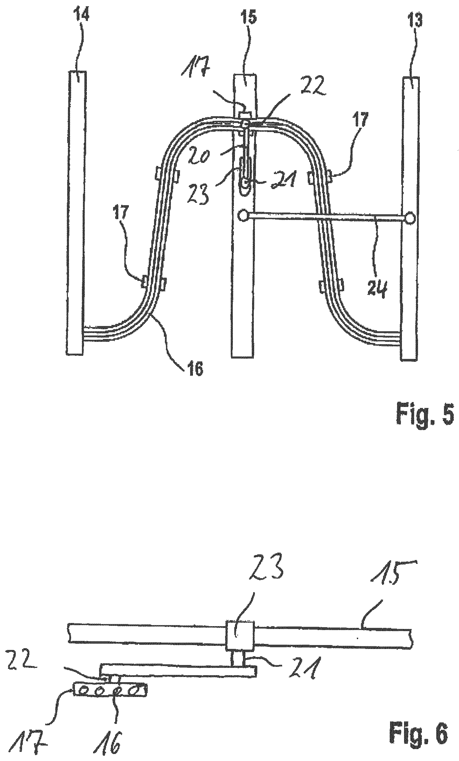

Der Mittelbügel 15 ist bei der Ausführungsform gemäß Fig. 5 über eine starre Lenkstange 24 mit dem Endrahmen 13 verbunden. Sowohl mit dem Endrahmen 13 als auch mit dem Mittelbügel 15 ist die Lenkstange 24 über ein Gelenk verbunden, das Schwenkbewegungen um eine senkrechte Gelenkachse zulässt. Wenn der Gelenkbus also um eine Kurve fährt und in seitlicher Richtung einknickt, kann der Mittelbügel 15 die entsprechende Schwenkbewegung nachvollziehen, so dass er permanent ungefähr eine Mittelposition zwischen dem Endrahmen 13 und dem Endrahmen 14 einnimmt. Fährt der Gelenkbus hingegen über eine Kuppe, so wird die entsprechende Nickbewegung nur zwischen dem Mittelbügel 15 und dem Endrahmen 14 ausgeglichen. Der Abstand zwischen dem Endrahmen 13 und dem Mittelbügel 15 bleibt aufgrund der Lenkstange 24 konstant. Bei Nickbewegungen ist der Mittelbügel 15 also nicht in einer Mittelposition zwischen dem Endrahmen 13 und dem Endrahmen 14. Insbesondere bei dieser Ausführungsform ist es von Vorteil, wenn eine Schiebeführung 23 zwischen dem Schwenkhebel 20 und dem Mittelbügel 15 vorgesehen ist, weil die Relativbewegungen zwischen dem Mittelbügel 15 und den Kabeln 16 stärker sind als bei einer Ausführungsform, bei der der Mittelbügel 15 permanent in einer Mittelposition zwischen dem Endrahmen 13 und dem Endrahmen 14 gehalten wird.

Bei den bisher beschriebenen Ausführungsformen werden die Kabel durch Trageelemente 17 zu einem Kabelstrang 16 zusammengehalten. Darüber hinaus sind keine weiteren Maßnahmen zur Stabilisierung des Kabelstrangs 16 vorgesehen. Der Weg, den der Kabelstrang 16 im Zwischenraum zwischen dem Vorderwagen 10 und dem Hinterwagen 11 nimmt, bestimmt sich allein aus der Eigenstabilität des Kabelstrangs 16. Bei anderen Ausführungsformen (nicht dargestellt) kann eine zusätzliche Kabelführung, beispielsweise in Form einer Blattfeder vorgesehen sein.

## Patentansprüche

1. Mittelbügelsystem für ein zwischen einem Vorderwagen (10) und einem Hinterwagen (11) eines Fahrzeugs angeordnetes, einen Durchgang (33) zwischen dem Vorderwagen (10) und dem Hinterwagen (11) bildendes Fahrzeuggelenk, umfassend einen Kabelstrang (16), wobei der Kabelstrang (16) dazu ausgelegt ist, sich zwischen dem Vorderwagen (10) und dem Hinterwagen (11) zu erstrecken und einen Mittelbügel (15), wobei der Mittelbügel (15) dazu ausgelegt ist, den Durchgang (33) zu umschließen und wobei der Kabelstrang (16) oberhalb des Durchgangs (33) anordenbar ist, weiter umfassend einen Schwenkhebel (20) zwischen dem Mittelbügel (15) und dem Kabelstrang (16), wobei zwischen dem Schwenkhebel (20) und dem Mittelbügel (15) ein erstes Schwenkgelenk (21) ausgebildet ist, **dadurch gekennzeichnet, dass** der Schwenkhebel (20) den Kabelstrang (16) mit einem radialen Abstand zur Achse des ersten Schwenkgelenks (21) führt.

2. Mittelbügelsystem nach Anspruch 1, **dadurch gekennzeichnet, dass** der Schwenkhebel (20) eine definierte Vertikalführung für den Kabelstrang (16) bietet.

3. Mittelbügelsystem nach einem der Ansprüche 1 bis 2, **dadurch gekennzeichnet, dass** der Schwenkhebel (20) dazu ausgelegt ist, den Kabelstrang (16) im Normalzustand, in dem das Gelenkfahrzeug gerade auf einer ebenen Fläche steht, unter einem Winkel von wenigstens 45°, vorzugsweise wenigstens 60°, weiter vorzugsweise wenigstens 80° schneidet.

4. Mittelbügelsystem nach einem der Ansprüche 1 bis 3, **dadurch gekennzeichnet, dass** ein zweites Schwenkgelenk (22) zwischen dem Schwenkhebel (20) und dem Kabelstrang (16) angeordnet ist.

5. Mittelbügelsystem nach einem der Ansprüche 1 bis 4, **dadurch gekennzeichnet, dass** der Schwenkbereich des Schwenkhebels (20) die Querrichtung umfasst.

6. Mittelbügelsystem nach einem der Ansprüche 1 bis 5, **gekennzeichnet durch** eine Schiebeführung (23) zwischen dem Schwenkhebel (20) und dem Mittelbügel (15) und/oder zwischen dem Schwenkhebel (20) und dem Kabelstrang (16).

7. Mittelbügelsystem nach Anspruch 6, **dadurch gekennzeichnet, dass** die Schiebeführung (23) in Querrichtung ausgerichtet ist.

8. Mittelbügelsystem nach einem der Ansprüche 1 bis 7, **dadurch gekennzeichnet, dass** der Schwenkhebel (20) längenvariabel ist.

9. Mittelbügelsystem nach einem der Ansprüche 1 bis 8, **dadurch gekennzeichnet, dass** das Mittelbügelsystem eine Kabelführung umfasst, wobei die Kabelführung dazu ausgelegt ist, sich zwischen dem Vorderwagen (10) und dem Hinterwagen (11) zu erstreckend und wobei der Kabelstrang (16) an der Kabelführung befestigt ist.

10. Mittelbügelsystem nach Anspruch 9, **dadurch gekennzeichnet, dass** die Kabelführung dazu ausgelegt ist, einen Weg fester Länge zwischen dem Vorderwagen (10) und dem Hinterwagen (11) zu definieren.

11. Mittelbügelsystem nach Anspruch 10, **dadurch gekennzeichnet, dass** die Kabelführung eine Blattfeder umfasst.

12. Mittelbügelsystem nach einem der Ansprüche 1 bis 11, **dadurch gekennzeichnet, dass** eine Lenkstange (24) vorgesehen ist, die an dem Mittelbügel (15) angelenkt ist und eine Drehung des Mittelbügels (15) um eine senkrechte Achse erlaubt, wobei die Lenkstange (24) mit dem Vorderwagen (10) oder dem Hinterwagen (11) verbindbar ist.

## Claims

1. Middle hoop system for a vehicle joint which is arranged between a vehicle front part (10) and a vehicle rear part (11) of a vehicle and forms a passage (33) between the vehicle front part (10) and the vehicle rear part (11), comprising a cable strand (16), wherein the cable strand (16) is designed to extend between the vehicle front part (10) and the vehicle rear part (11), and a middle hoop (15), wherein the middle hoop (15) is designed to surround the passage (33), and wherein the cable strand (16) can be arranged above the passage (33), furthermore comprising a pivot lever (20) between the middle hoop (15) and the cable strand (16), wherein a first pivot joint (21) is formed between the pivot lever (20) and the middle hoop (15), **characterized in that** the pivot lever (20) guides the cable strand (16) at a radial distance from the axis of the first pivot joint (21).

2. Middle hoop system according to Claim 1, **characterized in that** the pivot lever (20) provides defined vertical guidance for the cable strand (16) .

3. Middle hoop system according to either of Claims 1 and 2, **characterized in that** the pivot lever (20) is designed to intersect the cable strand (16) in the normal state, in which the articulated vehicle is exactly on a level surface, at an angle of at least 45°, preferably at least 60°, furthermore preferably at least 80°.

4. Middle hoop system according to one of Claims 1 to 3, **characterized in that** a second pivot joint (22) is arranged between the pivot lever (20) and the cable strand (16).

5. Middle hoop system according to one of Claims 1 to 4, **characterized in that** the pivoting range of the pivot lever (20) comprises the transverse direction.

6. Middle hoop system according to one of Claims 1 to 5, **characterized by** a sliding guide (23) between the pivot lever (20) and the middle hoop (15) and/or between the pivot lever (20) and the cable strand (16) .

7. Middle hoop system according to Claim 6, **characterized in that** the sliding guide (23) is oriented in the transverse direction.

8. Middle hoop system according to one of Claims 1 to 7, **characterized in that** the pivot lever (20) is variable in length.

9. Middle hoop system according to one of Claims 1 to 8, **characterized in that** the middle hoop system comprises a cable guide, wherein the cable guide is designed to extend between the vehicle front part (10) and the vehicle rear part (11), and wherein the cable strand (16) is fastened to the cable guide.

10. Middle hoop system according to Claim 9, **characterized in that** the cable guide is designed to define a path of fixed length between the vehicle front part (10) and the vehicle rear part (11).

11. Middle hoop system according to Claim 10, **characterized in that** the cable guide comprises a leaf spring.

12. Middle hoop system according to one of Claims 1 to 11, **characterized in that** a strut rod (24) is provided, said strut rod being coupled to the middle hoop (15) and permitting rotation of the middle hoop (15) about a vertical axis, wherein the strut rod (24) is connectable to the vehicle front part (10) or to the vehicle rear part (11).

## Revendications

1. Système d'arceau central pour une articulation de véhicule disposée entre une voiture avant (10) et une voiture arrière (11) d'un véhicule, formant un passage (33) entre la voiture avant (10) et la voiture arrière (11), comprenant un faisceau de câbles (16), le faisceau de câbles (16) étant conçu pour s'étendre entre la voiture avant (10) et la voiture arrière (11), et un arceau central (15), l'arceau central (15) étant conçu pour entourer le passage (33) et le faisceau de câbles (16) pouvant être disposé au-dessus du passage (33), comprenant en outre un levier pivotant (20) entre l'arceau central (15) et le faisceau de câbles (16), une première articulation pivotante (21) étant réalisée entre le levier pivotant (20) et l'arceau central (15), **caractérisé en ce que** le levier pivotant (20) guide le faisceau de câbles (16) à une distance radiale de l'axe de la première articulation pivotante (21).

2. Système d'arceau central selon la revendication 1, **caractérisé en ce que** le levier pivotant (20) offre un guidage vertical défini pour le faisceau de câbles (16).

3. Système d'arceau central selon l'une quelconque des revendications 1 et 2, **caractérisé en ce que** le levier pivotant (20) est conçu pour intersecter le faisceau de câbles (16), dans l'état normal dans lequel le véhicule articulé se trouve effectivement sur une surface plane, suivant un angle d'au moins 45°, de préférence d'au moins 60°, plus préférablement d'au moins 80°.

4. Système d'arceau central selon l'une quelconque des revendications 1 à 3, **caractérisé en ce qu'**une deuxième articulation pivotante (22) est disposée entre le levier pivotant (20) et le faisceau de câbles (16).

5. Système d'arceau central selon l'une quelconque des revendications 1 à 4, **caractérisé en ce que** la région de pivotement du levier pivotant (20) comprend la direction transversale.

6. Système d'arceau central selon l'une quelconque des revendications 1 à 5, **caractérisé par** un guide coulissant (23) entre le levier pivotant (20) et l'arceau central (15) et/ou entre le levier pivotant (20) et le faisceau de câbles (16).

7. Système d'arceau central selon la revendication 6, **caractérisé en ce que** le guide coulissant (23) est orienté dans la direction transversale.

8. Système d'arceau central selon l'une quelconque des revendications 1 à 7, **caractérisé en ce que** le levier pivotant (20) présente une longueur variable.

9. Système d'arceau central selon l'une quelconque des revendications 1 à 8, **caractérisé en ce que** le système d'arceau central comprend un guide-câble, le guide-câble étant conçu pour s'étendre entre la voiture avant (10) et la voiture arrière (11) et le faisceau de câbles (16) étant fixé au guide-câble.

10. Système d'arceau central selon la revendication 9, **caractérisé en ce que** le guide-câble est conçu pour définir une voie de longueur fixe entre la voiture avant (10) et la voiture arrière (11).

11. Système d'arceau central selon la revendication 10, **caractérisé en ce que** le guide-câble comprend un ressort à lame.

12. Système d'arceau central selon l'une quelconque des revendications 1 à 11, **caractérisé en ce qu'**une barre de direction (24) est prévue, laquelle est articulée à l'arceau central (15) et permet une rotation de l'arceau central (15) autour d'un axe vertical, la barre de direction (24) pouvant être connectée à la voiture avant (10) ou à la voiture arrière (11).
